# EUROPÄISCHE PATENTSCHRIFT

(11) **EP 1 919 762 B1**
(45) Veröffentlichungstag und Bekanntmachung des Hinweises auf die Patenterteilung: **14.04.2010**
(21) Anmeldenummer: 06778407.4
(22) Anmeldetag: 30.08.2006
(51) Int. Cl.: B62K 21/26, B62K 21/12

(54) **FAHRRADGRIFF**
BICYCLE HANDLE
POIGNEE DE BICYCLETTE

(30) Priorität: 30.08.2005 DE 202005013698 U
(43) Veröffentlichungstag der Anmeldung: 14.05.2008
(73) Patentinhaber: RTI Sports Vertrieb von Sportartikeln GmbH, 56220 Urmitz (DE)
(72) Erfinder: ARNOLD, Franc, 56068 Koblenz (DE)
(74) Vertreter: von Kreisler Selting Werner
(86) Internationale Anmeldenummer: PCT/EP2006/065827
(87) Internationale Veröffentlichungsnummer: WO 2007/025990

(56) Entgegenhaltungen:
- WO-A-99/39970
- WO-A1-01/02239
- WO-A2-2004/033281
- DE-C- 425 252
- US-A- 6 035 742

## Beschreibung

Die Erfindung betrifft einen Fahrradgriff, insbesondere einen Fahrradgriff für Trekkingbikes und Mountainbikes.

Fahrradgriffe weisen beispielsweise eine zylindrische, insbesondere geschlitzte Hülse auf, wobei die Hülse auf dem Fahrradlenker mit Hilfe eines Klemmmittels befestigt wird. Durch das Klemmmittel erfolgt ein Zusammenpressen der geschlitzten Hülse und somit ein klemmendes Befestigen des Fahrradgriffs an dem Fahrradlenker.

Aus WO 2005/021366 ist ein Fahrradgriff bekannt, der eine geschlitzte Hülse zum Aufstecken auf einen Fahrradlenker aufweist. Die Hülse ist mit einem Greifelement verbunden. Ferner weist die Hülse einen Klemmbereich auf, der insbesondere an der Außenseite des Griffs vorgesehen ist. Zur Befestigung des Fahrradgriffs an dem Fahrradlenker wird ein als Haltehorn ausgebildetes Klemmmittel derart angeordnet, dass es den Klemmbereich der Hülse umgibt. Mit Hilfe einer Schraube erfolgt sodann ein klemmendes Befestigen der Hülse auf dem Fahrradlenker.

Aus US 6,263,759 ist ein Fahrradgriff mit einem Haltehorn bekannt. Der Fahrradgriff weist eine auf das Lenkerende aufsteckbare Hülse aus relativ steifem Material auf, die von einem Greifelement aus weichem Material umgeben ist. Zur Lagefixierung der Hülse weist die Hülse an beiden Enden sich in Längsrichtung erstreckende Ansätze auf. Die Ansätze greifen in ebenfalls auf beiden Seiten des Fahrradgriffs angeordnete ringförmig ausgebildete Klemmmittel ein. Die beiden Klemmmittel sind ringförmig ausgebildet und weisen einen radial verlaufenden Schlitz auf. Die Klemmung erfolgt mit Hilfe einer Schraube durch Verringerung der Schlitzbreite. Das Lenkerhorn ist gesondert mit dem Lenker über eine weitere Klemmung verbunden.

Bei relativ langen Haltehörnern können, insbesondere wenn ein Mountainbike im Gelände gefahren wird, im Bereich der Klemmung hohe Kräfte und Momente auftreten. Dies kann dazu führen, dass sich das Haltehorn verdreht. Insbesondere, wenn das Haltehorn als Klemmmittel dient und eine aus Kunststoff oder dgl. vorgesehene Hülse umgibt, kann ein Kriechen des Hülsenmaterials auftreten. Ein Drehen des Haltehorns stellt ein hohes Sicherheitsrisiko dar.

Aufgabe der Erfindung ist es, einen Fahrradgriff mit Haltehorn zu schaffen, bei dem ein Verdrehen des Haltehorns auch bei großen Belastungen vermieden ist.

Die Lösung der Aufgabe erfolgt erfindungsgemäß durch die Merkmale des Anspruchs 1.

Der erfindungsgemäße Fahrradgriff, bei dem es sich insbesondere um einen Fahrragriff für Trekkingbikes und Mountainbikes handelt, weist eine Hülse mit einem Hülsenschlitz auf. Die Hülse ist auf einen Fahrradlenker aufsteckbar und weist an einem Rand der Hülse einen Klemmbereich auf. Vorzugsweise erstreckt sich der Hülsenschlitz über den gesamten Klemmbereich. Die Hülse ist mit einem Greifelement, das vorzugsweise aus einem weicheren Kunststoff hergestellt ist, verbunden. Die Hülse und das Greifelement können jedoch auch einstückig ausgebildet sein. Zur Befestigung des Fahrradgriffs an dem Fahrradlenker ist im Klemmbereich der Hülse ein Klemmmittel angeordnet, wobei das Klemmmittel mit einem Haltehorn verbunden sein kann oder das Haltehorn derart ausgebildet sein kann, dass es als Klemmmittel dient und somit das Klemmmittel und das Haltehorn einstückig ausgebildet ist. Um ein Verdrehen des Haltehorns und/oder des Fahrradgriffs, der ggf. kein Haltehorn aufweist, zu vermeiden, ist erfindungsgemäß zwischen dem Klemmmittel, insbesondere dem als Haltehorn ausgebildeten Klemmmittel und dem Fahrradienker eine Verdrehsicherung angeordnet, die reibschlüssig mit dem Fahrradlenker verbunden ist. Durch Vorsehen einer derartigen Verdrehsicherung ist sichergestellt, dass auch bei starken Belastungen ein Verdrehen des Haltehorns vermieden ist. Hierdurch ist die Sicherheit erheblich verbessert.

Erfindungsgemäß ist das Klemmmittel teilweise im Klemmbereich der Hülse angeordnet, so dass die Verdrehsicherung an den Klemmbereich der Hülse in deren Längsrichtung angrenzend ist.

Die Verdrehsicherung ist vorzugsweise derart ausgebildet, dass sie den Fahrradlenker zumindest teilweise umgibt. Insbesondere ist die Verdrehsicherung ringförmig oder teilringförmig ausgebildet. Ferner ist die Verdrehsicherung in besonders bevorzugter Ausführungsform als geschlitzter Ring ausgebildet. Hierbei verläuft der Schlitz vorzugsweise in axialer Richtung, d.h. in Längsrichtung des Fahrradlenkers.

Die Verdrehsicherung ist insbesondere unmittelbar mit dem Klemmmittel bzw. dem als Klemmmittel ausgebildeten Haltehorn verbunden und kann ggf. auch einstückig ausgebildet sein, so dass das Klemmmittel bzw. das Haltehorn einen ringförmigen, in Richtung des Lenkers weisenden Ansatz aufweist. In montiertem Zustand berührt die Verdrehsicherung vorzugsweise die Außenseite des Fahrradlenkers. Vorzugsweise ist die Verdrehsicherung daher unmittelbar zwischen dem Klemmmittel und dem Fahrradlenker angeordnet.

Bei einer besonders bevorzugten Ausführungsform ist die Verdrehsicherung ferner mit der Hülse verbunden. Bei dieser Verbindung handelt es sich vorzugsweise um eine formschlüssige Verbindung, die beispielsweise durch eine Verzahnung oder dgl. gewährleistet ist. Vorzugsweise weist die Verdrehsicherung oder die Hülse eine sich in axiale Richtung erstreckende Ausnehmung auf, in die ein an der Hülse oder Verdrehsicherung vorgesehener, sich ebenfalls in axiale Richtung erstreckender Ansatz eingreift. Durch die vorzugsweise um eine formschlüssige Verbindung, die beispielsweise durch eine Verzahnung oder dgl. gewährleistet ist. Vorzugsweise weist die Verdrehsicherung oder die Hülse eine sich in axiale Richtung erstreckende Ausnehmung auf, in die ein an der Hülse oder Verdrehsicherung vorgesehener, sich ebenfalls in axiale Richtung erstreckender Ansatz eingreift. Durch die

Verbindung zwischen der Verdrehsicherung und der Hülse ist ferner sichergestellt, dass ein Verdrehen des Greifelements bzw. der Hülse auf dem Fahrradlenker vermieden ist. Dies ist insbesondere bei Fahrradgriffen vorteilhaft, deren Greifelement ein Abstützelement zum Abstützen des Handtellers aufweisen.

Erfindungsgemäß weist das Klemmmittel vorzugsweise einen ringförmigen Bereich oder Ansatz auf, der die vorzugsweise ebenfalls ringförmige Verdrehsicherung vollständig umgibt. Hierdurch ist eine gute Kraft- und/oder Momentenübertragung gewährleistet.

Besonders bevorzugt ist es, dass das Klemmmittel eine Klemmfläche aufweist, an der die Verdrehsicherung anliegt, beispielsweise durch Verkleben fest verbunden ist, und/oder einstückig mit dem Klemmmittel ausgebildet ist. Ferner ragt die Klemmfläche des Klemmmittels in den Klemmbereich der Hülse hinein. Insbesondere ist der gesamte Klemmbereich der Hülse innerhalb des Klemmmittels angeordnet und liegt somit vollständig an der Klemmfläche an.

Die vorzugsweise ringförmig ausgebildete Verdrehsicherung weist einen Außendurchmesser auf, der dem Außendurchmesser der Hülse im Klemmbereich entspricht. Vorzugsweise ist somit durch den Klemmbereich und die Außenseite der Verdrehsicherung eine zylindrische Fläche ausgebildet. Das Klemmmittel weist vorzugsweise eine ebenfalls zylindrisch ausgebildete Klemmfläche auf, wobei der Durchmesser des Klemmmittels in unverklemmtem Zustand geringfügig größer als der Durchmesser der durch die Außenseite der Verdrehsicherung und den entsprechenden Außenbereichs der Hülse gebildete zylindrische Fläche ist.

Bei einer besonders bevorzugten Ausführungsform der Erfindung hat das Klemmmittel eine Doppelfunktion, da es sowohl zum Klemmen der Hülse des Fahrradgriffs als auch zum klemmenden Halten des Haltehorns dient. Dies ist dadurch erreicht, dass sowohl die Verdrehsicherung, als auch der Klemmbereich der Hülse innerhalb des Klemmmittels angeordnet ist.

Da die Verdrehsicherung reibschlüssig mit dem Fahrradlenker verbunden ist, ist die Verdrehsicherung vorzugsweise aus Metall, insbesondere Aluminium. Durch Vorsehen einer aus relativ steifem Material hergestellten Verdrehsicherung ist beim Auftreten von hohen Kräften und Momenten die Gefahr des Fliessens des Materials verringert. Insbesondere bei einem ein Haltehorn aufweisenden Fahrradgriff können die am freien Ende des Haltehorns auftretenden Kräfte und die hierdurch an der Verdrehsicherung erzeugten Momente aufgenommen werden, so dass ein Verdrehen des Haltehorns auch bei Auftreten hoher Kräfte vermieden ist. Hierdurch ist die Sicherheit erheblich verbessert.

Mit Hilfe der erfindungsgemäßen Verdrehsicherung kann eine Drehfestigkeit des Fahrradgriffs von über 40 Nm, insbesondere von über 50 Nm. Hierdurch ist sicher gestellt, dass auch bei hohen auftretenden Kräften insbesondere auch am Halthorn ein Verdrehen des Fahrradgriffs vermieden ist. Dies stellt einen erheblichen Sicherheitsaspekt dar.

Die Klemmung des Fahrradgriffes, insbesondere der Verdrehsicherung erfolgt vorzugsweise mit Hilfe einer Schraube. Die Schraube weist bei der besonders bevorzugten Ausführungsform des erfindungsgemäßen Fahrradgriffs ein Anzugsmoment von ca. 10 Nm auf.

Auf Grund des erfindungsgemäßen Vorsehens einer Verdrehsicherung zwischen dem Klemmmittel und dem Lenker, und der Tatsache, dass das Klemmmittel auch in einen Klemmbereich der Hülse ragt, ist es ausreichend ein einziges Klemmmittel vorzusehen. Dies ist in besonders bevorzugter Ausführungsform mit dem Haltehorn verbunden und somit an der Außenseite des Lenkers bzw. des Fahrradgriffs angeordnet. Ein zusätzliches Klemmmittel an der Innenseite des Fahrradgriffs ist nicht erforderlich.

Das Vorsehen einer gesonderten Verdrehsicherung hat ferner den Vorteil, dass die Verdrehsicherung selbst aus einem steifem Material wie Metall oder Aluminium hergestellt sein kann, das die Verdrehsicherung umgebende Klemmmittel jedoch aus einem z. B. weicherem Material, wie Kunststoff- und/oder Verbundmaterial hergestellt sein kann. Dies hat den Vorteil, dass das Klemmmittel selbst insbesondere ergonomisch ausgestaltet sein kann. Auch komplexe Formgebungen sind mit Kunststoff einfacherer ausgestaltbar. Insbesondere wenn das Klemmmittel und das Haltehorn einstückig ausgebildet sind, ist die Verwendung von Kunststoff bevorzugt, da der Greifkomfort hierdurch verbessert und ferner die Kosten reduziert werden können.

Nachfolgend wird die Erfindung anhand bevorzugter Ausführungsformen unter Bezugnahme auf die anliegenden Zeichnungen näher erläutert.

Es zeigen:
- Fig. 1: eine schematische Schnittansicht einer ersten Ausführungsform des erfindungsgemäßen Fahrradgriffs,
- Fig. 2: eine schematische, perspektivische Ansicht der Verdrehsicherung,
- Fig. 3: eine schematische Draufsicht der Verdrehsicherung,
- Fig. 4: eine schematische Draufsicht einer Vergrößerung des Klemmbereichs, und
- Fig. 5: eine schematische, perspektivische Ansicht einer zweiten Ausführungsform des Fahrradgriffs.

Der Fahrradgriff weist eine Hülse 10 auf, die auf einen Fahrradlenker 12 aufsteckbar ist. Mit der Hülse 10 ist ein Greifelement 14 verbunden. Die Verbindung zwischen der Hülse 10 und dem Greifelement 14 erfolgt beispielsweise durch Verkleben. Ebenso kann das Greifelement 14 und die Hülse 10 einstückig ausgebildet sein. An einem Ende der Hülse 10 ist ein Klemmbereich 16 vorgesehen, wobei sich ein Schlitz 18 vorzugsweise über die gesamte Breite des Klemmbereichs erstreckt.

Mit Hilfe eines Klemmmittels 20, das im dargestellten Ausführungsbeispiel Teil eines Haltehorns 28 ist, erfolgt ein klemmendes Befestigen der Hülse 10 auf dem Lenker 12. Hierzu weist das Klemmmittel 20 einen Schlitz 22 auf, der sich über die gesamte Breite des Klemmmittels 20 erstreckt. Das Klemmmittel 20 weist einen zylindrischen Innenraum 24 auf, dessen Innendurchmesser dem Außendurchmesser der Hülse 10 im Klemmbereich 16 entspricht. Mit Hilfe einer Schraube oder einem anderen Befestigungsmittel kann der Innendurchmesser des zylindrischen Bereichs 24 des Klemmmittels 20 verringert werden, indem die Schraube in ein Gewinde 26 eingeschraubt wird. Hierdurch folgt ein Verklemmen der geschlitzten Hülse 10 auf dem Lenker 12. Um ein Verdrehen des mit dem Klemmmittel 20 verbundenen Haltehorns 28, insbesondere bei hohen Belastungen, zu vermeiden, ist eine Verdrehsicherung 30 vorgesehen. Hohe Belastungen treten insbesondere dann auf, wenn das Haltehorn 28 lang ausgebildet ist und/ oder am äußeren Ende angefasst wird. Ferner treten insbesondere hohe Belastungen bei Fahrten im Gelände auf.

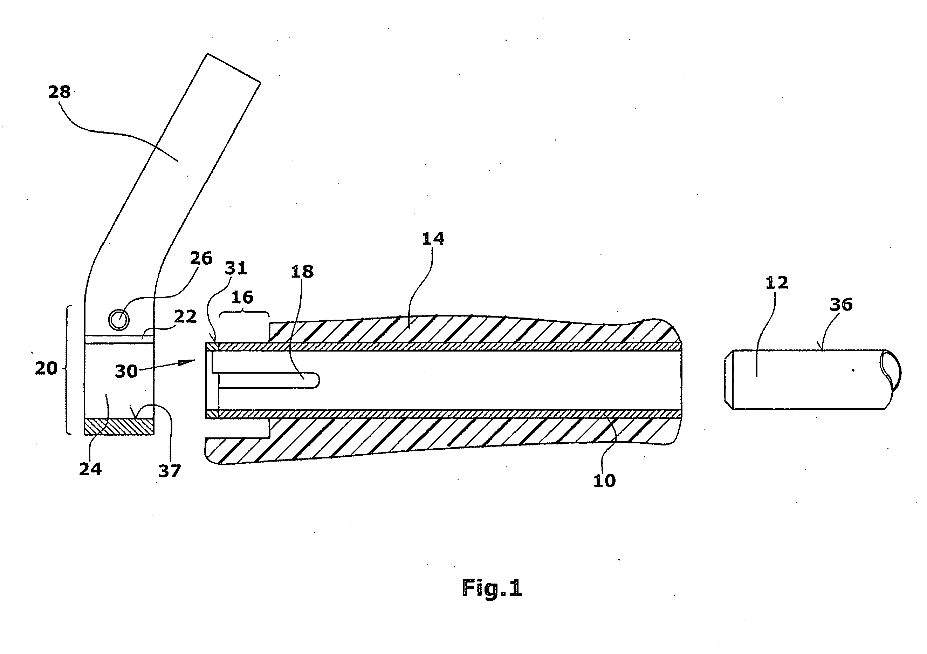

Die Verdrehsicherung 30 weist einen sich in axialer Richtung, d.h. in Längsrichtung des Lenkers 12, erstreckenden Schlitz 32 auf und ist ringförmig ausgebildet. In montiertem Zustand liegt eine Innenseite 34 der Verdrehsicherung 30 an einer Außenseite 36 (Fig. 1) des Fahrradlenkers 12 an, wobei auf Grund der zwischen der Verdrehsicherung 30 und dem Fahrradlenker 12 herrschenden Reibung ein Verdrehen des Haltehorns 28 auch bei großen Belastungen vermieden ist.

In der besonders bevorzugten dargestellten Ausführungsform weist das Klemmmittel 20 somit eine zylindrische Klemmfläche 37 auf. Die Breite der Klemmfläche 37, d. h. die Erstreckung der Klemmfläche 37 in Längsrichtung des Lenkers 12 entspricht der Summe der Breite der Verdrehsicherung 30 und des Klemmbereichs 16. Eine Außenseite 31 der Verdrehsicherung 30 ist ebenfalls zylindrisch und weist den selben Durchmesser wie der Klemmbereich 16 auf, der ebenfalls eine zylindrische Fläche ausbildet.

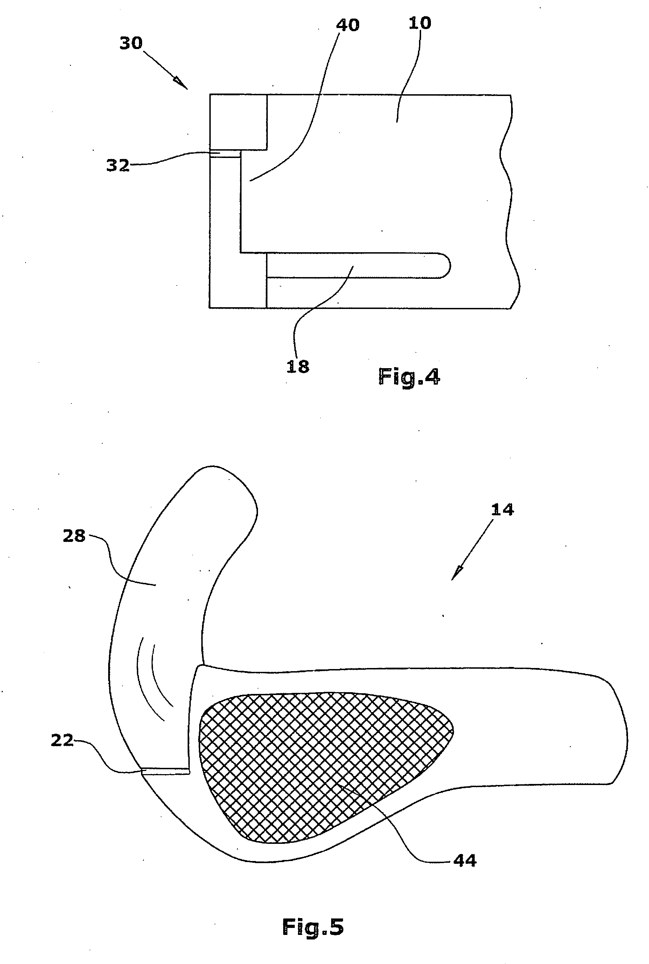

Insbesondere weist die Verdrehsicherung 30 eine Ausnehmung 38 auf. In die Ausnehmung 38 greift ein Ansatz 40 (Fig. 4) der Hülse 10 ein. Hierdurch ist ein Verdrehen der Verdrehsicherung gegenüber der Hülse 10 vermieden. Die Verdrehsicherung 30 gewährleistet somit, dass das. Haltehorn 28 sich nicht gegenüber der Hülse 10 bzw. dem mit der Hülse 10 verbundenen Greifelement 14 sowie auch nicht gegenüber dem Lenker 12 verdrehen kann.

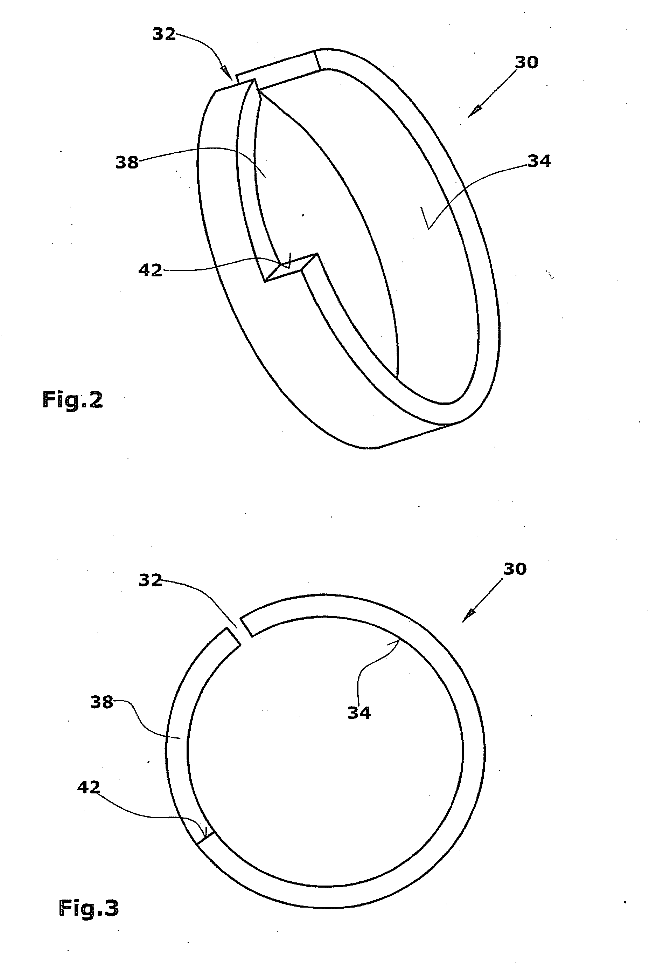

Selbstverständlich können auch mehrere Verzahnungen 38, 40 vorgesehen sein, um die auf eine Flanke 42 der Ausnehmung 30 (Fig. 2) wirkenden Kräfte zu verringern.

Bei der in Fig. 5 dargestellten weiteren Ausführungsform der Erfindung handelt es sich um einen Fahrradgriff, dessen Innenaufbau dem in Fig. 1 dargestellten Aufbau entspricht. Die Gestaltung des Greifelements 14 unterscheidet sich jedoch insofern, dass ein Abstützteil 44 mit dem Greifelement 14 verbunden ist bzw. Teil des Greifelements 14 ist. Das Abstützteil dient zum Abstützen eines Handtellers, so dass ein ergonomischer Griff ausgebildet ist.

## Patentansprüche

1. Fahrradgriff, insbesondere für Trekking- und Mountainbikes, mit
einer einen Hülsenschlitz (18) aufweisenden Hülse (10) zum Aufstecken auf einen Fahrradlenker (12), wobei die Hülse (10) einen an einem Rand der Hülse (10) angeordneten Klemmbereich (16) aufweist,
einem teilweise im Klemmbereich (16) der Hülse (10) angeordneten Klemmmittel (20) zum klemmenden Befestigen der Hülse (10) auf dem Fahrradlenker (12), und
einem mit der Hülse (10) verbundenen Greifelement (14),
**gekennzeichnet durch**
eine zwischen dem Klemmmittel (20) und dem Fahrradlenker (12) angeordnete Verdrehsicherung (30) zum reibschlüssigen Verbinden mit dem Fahrradlenker (12), wobei die Verdrehsicherung (30) an den Klemmbereich (16) der Hülse (10) in deren Längsrichtung angrenzt.

2. Fahrradgriff nach Anspruch 1, **dadurch gekennzeichnet, dass** die Verdrehsicherung (30) den Fahrradlenker (12) zumindest teilweise umgibt.

3. Fahrradgriff nach Anspruch 1 oder 2, **dadurch gekennzeichnet, dass** die Verdrehsicherung (30) ringförmig ausgebildet ist.

4. Fahrradgriff nach einem der Ansprüche 1 - 3, **dadurch gekennzeichnet, dass** die Verdrehsicherung (30) einen Schlitz (32) aufweist.

5. Fahrradgriff nach einem der Ansprüche 1 - 4, **dadurch gekennzeichnet, dass** die Verdrehsicherung (30) im Wesentlichen denselben Außendurchmesser wie der Klemmbereich (16) der Hülse (10) aufweist.

6. Fahrradgriff nach einem der Ansprüche 1 bis 5, **dadurch gekennzeichnet, dass** das Klemmmittel (20) die Verdrehsicherung (30) vollständig umgibt.

7. Fahrradgriff nach einem der Ansprüche 1 bis 6, **dadurch gekennzeichnet, dass** das Klemmmittel (20) eine Klemmfläche (37) aufweist, an der die Verdrehsicherung (30) anliegt und die in den Klemmbereich (16) der Hülse (10) ragt.

8. Fahrradgriff nach einem der Ansprüche 1 - 7, **dadurch gekennzeichnet, dass** die Verdrehsicherung (30) mit der Hülse (10) verbunden ist.

9. Fahrradgriff nach einem der Ansprüche 1 - 8, **dadurch gekennzeichnet, dass** die Verdrehsicherung (30) mit der Hülse (10) formschlüssig, insbesondere über eine Verzahnung (38, 40) verbunden ist.

10. Fahrradgriff nach Anspruch 8 oder 9, **dadurch gekennzeichnet, dass** die Verdrehsicherung (30) oder die Hülse (10) eine sich axial erstreckende Ausnehmung (38) aufweist, in die ein an der Hülse (10) oder der Verdrehsicherung (30) angeordneter, sich in axiale Richtung erstreckender Ansatz (40) eingreift.

11. Fahrradgriff nach einem der Ansprüche 1 bis 10, **dadurch gekennzeichnet, dass** das Klemmmittel (20) eine Klemmfläche aufweist, mit der die Verdrehsicherung (30) durch Verkleben fest verbunden ist oder dass die Verdrehsicherung (30) einstückig mit dem Klemmmittel (20) ausgebildet ist.

12. Fahrradgriff nach einem der Ansprüche 1 - 11, **dadurch gekennzeichnet, dass** die Verdrehsicherung (30) aus Metall, insbesondere aus Aluminium ist.

13. Fahrradgriff nach einem der Ansprüche 1 bis 11, **dadurch gekennzeichnet, dass** ein mit dem Klemmmittel (20) verbundenes Haltehorn (28) vorgesehen ist.

## Claims

1. A bicycle handle, in particular for trekking and mountain bikes, comprising
a sleeve (10) having a sleeve slot (18) formed therein and being provided to be mounted to a bicycle handlebar (12), said sleeve (10) comprising a clamping region (16) arranged at an edge of the sleeve (10),
a clamping device (20) at least partially arranged in said clamping region (16) of the sleeve (10) for fastening the sleeve (10) to the bicycle handlebar (12) by clamping, and
a grip element (14) connected to the sleeve (10),
**characterized by**
a rotation-prevention means (30) arranged between the clamping device (20) and the bicycle handlebar (12) for frictional engagement with the bicycle handlebar (12), the rotation-prevention means (30) adjoining the clamping region (16) of the sleeve (10) in the longitudinal direction thereof.

2. The bicycle handle according to claim 1, **characterized in that** said rotation-prevention means (30) at least partially surrounds the bicycle handlebar (12).

3. The bicycle handle according to claim 1 or 2, **characterized in that** said rotation-prevention means (30) is of an annular shape.

4. The bicycle handle according to any one of claims 1 - 3, **characterized in that** said rotation-prevention means (30) has a slot (32) formed therein.

5. The bicycle handle according to any one of claims 1 - 4, **characterized in that** said rotation-prevention means (30) has substantially the same outer diameter as the clamping region (16) of the sleeve (10).

6. The bicycle handle according to any one of claims 1 - 5, **characterized in that** said clamping device (20) completely surrounds said rotation-prevention means (30).

7. The bicycle handle according to any one of claims 1 - 6, **characterized in that** said clamping device (20) comprises a clamping surface (37) being abutted by said rotation-prevention means (30) and extending into the clamping region (16) of the sleeve (10).

8. The bicycle handle according to any one of claims 1 - 7, **characterized in that** said rotation-prevention means (30) is connected to the sleeve (10).

9. The bicycle handle according to any one of claims 1 - 8, **characterized in that** said rotation-prevention means (30) is connected to the sleeve (10) by a form-fitting connection, preferably by a toothing arrangement (38,40).

10. The bicycle handle according to claim 8 or 9, **characterized in that** said rotation-prevention means (30) or the sleeve (10) comprises an axially extending recess (38) which is engaged by a projection (40) arranged on the sleeve (10) or on said rotation-prevention means (30) and extending in axial direction.

11. The bicycle handle according to any one of claims 1 - 10, **characterized in that** said clamping device (20) has a clamping surface with which the rotation-prevention means (30) is securely connected by adhesion, or **in that** the rotation-prevention means (30) is formed integrally with the clamping device (20).

12. The bicycle handle according to any one of claims 1 - 11, **characterized in that** said rotation-prevention means (30) is made of metal, particularly aluminum.

13. The bicycle handle according to any one of claims 1 - 11, **characterized in that** a bar end (28) is provided which is connected to said clamping device (20).

## Revendications

1. Poignée de bicyclette, notamment pour des vélos de randonnée et des vélos tout terrain, comprenant
un manche (10) avec une fente de manchon (18) destinée à être enfiché sur un guidon (12), ledit manche (10) comprenant une région de serrage (16) prévue à un bord dudit manche (10),
un moyen de serrage (20) pour la fixation serrée dudit manche (10) sur ledit guidon (12), le moyen de serrage étant partiellement disposé dans ladite région de serrage (16) dudit manche (10), et
un élément de préhension (14) connecté audit manche (10),
**caractérisée par**
un dispositif anti-rotation (30) disposé entre ledit moyen de serrage (20) et ledit guidon (12) pour connecter ledit dispositif au guidon (12) par friction, ledit dispositif anti-rotation (30) bordant la région de serrage (16) dudit manche (10).

2. Poignée de bicyclette selon la revendication 1, **caractérisée en ce que** le guidon (12) est au moins partiellement enveloppé par le dispositif anti-rotation (30).

3. Poignée de bicyclette selon la revendication 1 ou 2, **caractérisée en ce que** le dispositif anti-rotation (30) est en forme annulaire.

4. Poignée selon l'une quelconque des revendications 1 à 3, **caractérisée en ce que** le dispositif anti-rotation (30) comprend une fente (32).

5. Poignée selon l'une quelconque des revendications 1 à 4, **caractérisée en ce que** le dispositif anti-rotation (30) a sensiblement le même diamètre extérieur que la région de serrage (16) dudit manche (10).

6. Poignée selon l'une quelconque des revendications 1 à 5, **caractérisée en ce que** le moyen de serrage (20) enveloppe tout le dispositif anti-rotation (30).

7. Poignée selon l'une quelconque des revendications 1 à 6, **caractérisée en ce que** ledit moyen de serrage (20) comprend une surface de serrage (37) bordée par ledit dispositif anti-rotation (30) et s'étendant dans la région de serrage (16) dudit manche (10).

8. Poignée selon l'une quelconque des revendications 1 à 7, **caractérisée en ce que** ledit dispositif anti-rotation (30) est connecté audit manche (10).

9. Poignée selon l'une quelconque des revendications 1 à 8, **caractérisée en ce que** le dispositif anti-rotation (30) est connecté audit manche (10) d'une manière positive, notamment par une denture (38, 40).

10. Poignée selon la revendication 8 ou 9, **caractérisée en ce que** ledit dispositif anti-rotation (30) ou ledit manche (10) comprend un creux (38) axial dans lequel engage une saillie (40) axiale disposée sur le manche (10) ou ledit dispositif anti-rotation (30).

11. Poignée selon l'une quelconque des revendications 1 à 10, **caractérisée en ce que** ledit moyen de serrage (20) a une surface de serrage avec laquelle le dispositif anti-rotation (30) est solidarisé par adhésion, ou que ledit dispositif anti-rotation (30) est formé d'un seul tenant avec ledit moyen de serrage (20).

12. Poignée selon l'une quelconque des revendications 1 à 11, **caractérisée en ce que** ledit dispositif anti-rotation (30) est formé de métal, notamment d'aluminium.

13. Poignée selon l'une quelconque des revendications 1 à 11, **caractérisée en ce qu'**une corne de préhension (28) est prévue, qui est connectée audit moyen de serrage (20).
